(19) Europäisches Patentamt

European Patent Office

Office européen des brevets

(11) Numéro de publication: **0 234 376 B1**

(12) **FASCICULE DE BREVET EUROPEEN**

(45) Date de publication de fascicule du brevet: **02.09.92** (51) Int. Cl.⁵: **A21C 11/16, A21C 3/08**

(21) Numéro de dépôt: **87101692.9**

(22) Date de dépôt: **07.02.87**

(54) **Appareil d'extrusion.**

(30) Priorité: **27.02.86 EP 86102567**

(43) Date de publication de la demande:
**02.09.87 Bulletin 87/36**

(45) Mention de la délivrance du brevet:
**02.09.92 Bulletin 92/36**

(84) Etats contractants désignés:
**CH DE ES FR GB IT LI**

(56) Documents cités:
**FR-A- 744 063      GB-A- 2 073 573**
**SU-A- 168 615      US-A- 1 709 280**
**US-A- 2 041 432     US-A- 4 504 511**
**US-A- 4 536 147**

(73) Titulaire: **FRISCO-FINDUS AG**
**Industriestrasse**
**CH-9400 Rorschach(CH)**
(84) Etats contractants désignés:
**CH DE ES GB IT LI**

(73) Titulaire: **NESTEC S.A.**
**Avenue Nestlé 55**
**Vevey(CH)**
(84) Etats contractants désignés:
**FR**

(72) Inventeur: **Daouse, Alain**
**224 rue de Larris**
**F-60430 Noailles(FR)**
Inventeur: **Gueroult, Alain**
**7 rue Lamartine**
**F-60000 Goincourt(FR)**

Rank Xerox (UK) Business Services

## Description

La présente invention se rapporte à l'extrusion et la décoration de produits pâteux.

L'application de l'extrusion continue à la fabrication de produits alimentaires décorés, notamment de produits de pâtisserie, boulangerie, d'articles de confiserie ou de dessert, par exemple de crèmes glacées est connue.

La méthode usuelle consiste à déposer un boudin continu de matière pâteuse sur un tapis transporteur en défilement. Le boudin peut ensuite être décoré manuellement par simple dépose d'éléments décoratifs continus ou discontinus. En variante, l'opération de décoration peut être mécanisée, en particulier pour la dépose de décors continus, au moyen de dispositifs annexes d'extrusion comprenant des buses fixes situées tangentiellement au boudin, par exemple animées d'un mouvement de va-et-vient dans un plan parallèle à l'axe du boudin.

Selon une autre méthode connue, par exemple du brevet US-A-4.504.511, on forme un boudin décoré de produit pâteux au moyen d'une buse tournant autour de l'axe d'écoulement du produit, dont au moins l'un des orifices de sortie est désaxé par rapport à l'axe d'écoulement. Le boudin en forme d'enroulement ou, le cas échéant, de torsade est confectionné dans l'espace libre à la sortie de la buse du fait de la rotation non uniforme des orifices de sortie désaxés. Il peut être déposé sur une bande transporteuse en défilement qui ne participe pas directement à sa mise en forme. Les dispositifs de mise en oeuvre de cette dernière méthode ont l'avantage de regrouper dans la même tête d'extrusion les organes d'extrusion principal et annexes.

La construction d'une tête rotative d'extrusion est relativement compliquée: des joints entre les pièces mobiles et les pièces fixes doivent être prévus au niveau même de la buse ainsi qu'un mécanisme d'entraînement des pièces mobiles. Le problème s'aggrave si l'on désire obtenir des boudins décorés de forme complexe dès lors que leur forme est donnée par la seule rotation de la buse sur elle-même sans participation de la surface sur laquelle ils sont déposés. Par suite, une telle tête est encombrante et difficile à nettoyer.

Le brevet US-A-4.536.147 qui comporte toutes les caractéristiques du préambule des revendications 1 et 2 décrit un appareil d'extrusion et de décoration de produits pâteux comprenant un tapis transporteur animé d'un mouvement de translation continue, un support mobile au-dessus du tapis transporteur, dont est solidaire une buse d'extrusion reliée par un tube souple à une source d'alimentation en produit pâteux et des moyens de mise en mouvement du support, de manière qu'il évolue dans un plan et garde toujours la même orientation dans l'espace et que l'orifice de sortie de la buse décrive une trajectoire courbe répétitive.

Dans cet appareil, l'alimentation en produit pâteux peut être continue ou discontinue, par exemple dans la forme représentée. Cependant, du fait de la position verticale des buses d'extrusion, le boudin formé est écrasé et déforme. Par ailleurs, le dispositif est relativement lourd et peu flexible puisqu'il comprend deux chariots orthogonaux mobiles sur des rails fixés sur le bâti même du tapis transporteur.

Le document SU-A-168 615 divulgue qu'il est possible d'utiliser des lecteurs optiques pour former des décorations compliquées sur des produits pâteux dans un appareil d'application automatique de crème sur des tartes. L'application des décorations est discontinue, la tarte étant portée par un plateau immobile pendant la décoration. Les mouvements respectifs des chariots superposés, dont le chariot supérieur porte les buses, ainsi que l'ouverture et la fermeture des buses sont commandés par des dispositifs de commande à raison d'un dispositif par mouvement, chaque dispositif lisant optiquement une bande strillée et agissant sur un moteur électrique réversible. Le mouvement des buses est horizontal et il n'y a pas de lecture optique d'un dessin contrasté.

Nous avons trouvé qu'on pouvait fabriquer des boudins décorés de produits pâteux en forme d'enroulement ou de torsade au moyen d'un appareil simple, peu encombrant et facile à nettoyer.

L'invention concerne un appareil d'extrusion et de décoration de produits pâteux, comprenant un tapis transporteur animé d'un mouvement de translation continue, un support mobile au-dessus du tapis transporteur, dont est solidaire une buse d'extrusion reliée par un tube souple à une source d'alimentation continue en produit pâteux, la buse étant orientée parallèlement à ou inclinée vers la direction de mouvement du tapis transporteur, des moyens de mise en mouvement du support, de manière qu'il évolue dans un plan et garde toujours la même orientation dans l'espace et que l'orifice de sortie de la buse décrive une trajectoire courbe répétitive, de sorte que le support et le tapis transporteur coopérent pour former sur ce dernier un boudin continu régulièrement enroulé.

L'appareil est caractérisé par le fait que les moyens de mise en mouvement du support comprennent un premier ensemble de galets solidaires du support, coulissant sur une première glissière mobile en translation, un second ensemble de galets solidaires de la première glissière, coulissant sur une seconde glissière et une manivelle à levier réglable dont l'arbre d'entraînement est relié à un moteur et dont l'oeil est articulé sur le support.

Dans un deuxième mode de réalisation, les moyens de mise en mouvement du support comprennent le premier et le second ensemble de galets et un ensemble de lecture d'un dessin relié à un ensemble de traitement de l'image produite, lui-même relié à un ensemble d'asservissement du support de buse à un mouvement reproduisant le tracé du dessin.

Dans cette réalisation, l'ensemble d'asservissement du support de buse est constitué d'un premier élément d'asservissement pilotant un premier moteur qui entraîne en tournant une première vis sans fin prenant sur le filetage d'un premier écrou et le déplaçant dans les deux sens suivant un axe XX, d'un second élément d'asservissement pilotant un second moteur fixé au premier écrou qui entraîne une seconde vis sans fin perpendiculaire à la première vis prenant sur le filetage d'un second écrou et le déplacant dans les deux sens suivant un axe YY perpendiculaire à l'axe XX, que le support de buse est monté articulé sur une pièce fixe solidaire du second écrou et que les positions du premier et du second écrou sont contrôlées par des capteurs reliés aux éléments d'asservissement respectifs.

La formation de l'enroulement est la conséquence de l'interaction entre le boudin quittant la buse et le tapis transporteur. On peut réaliser un grand nombre de formes décoratives différentes en ajustant les différents paramètres tels que la vitesse avec laquelle l'orifice de la buse décrit la trajectoire courbe, la configuration de la trajectoire, la vitesse d'extrusion, la distance et l'inclinaison de la buse par rapport au tapis et la vitesse du tapis.

La buse peut être horizontale ou être inclinée vers la direction de mouvement du tapis transporteur suivant un angle allant jusqu'à 60°, de préférence de 20 à 60°, par exemple 30° à 45°.

On entend généralement par "solidaire du support" le fait que la buse est fixée au support mobile. Dans certains cas cependant, par exemple lorsqu'on désire que le boudin présente en son coeur même une configuration en spirale, la buse peut également tourner autour de son axe. Dans un tel cas, le mouvement de rotation de la buse sur elle-même peut lui être avantageusement communiqué par un raccord tournant qui entraîne le tuyau souple en amont de celle-ci.

L'orifice de sortie peut avoir un profil quelconque, par exemple ovale, circulaire, polygonal ou en étoile et comporter des cannelures, dentures ou rainures. Ces profils peuvent par exemple être ceux des douilles de décoration utilisées habituellement par les pâtissiers et confiseurs.

Selon un mode de réalisation de l'appareil, l'orifice de sortie décrit un cercle, de préférence de 5 à 50 mm de rayon. Bien entendu, la vitesse d'extrusion, la vitesse de déplacement de la buse et la vitesse d'avancement du tapis transporteur sont liées. A titre indicatif, pour un orifice de sortie d'environ 40 mm de diamètre, lorsque la buse décrit 70 à 100 cercles/min., avec un débit de produit de 150 à 250 l/h, on obtient de bons résultats lorsque la vitesse du tapis transporteur est d'environ 3 m/min.

Lorsque la buse tourne autour de son axe comme indiqué précédemment et que le support est animé d'un mouvement circulaire, on préfère que le sens de rotation de la buse sur elle-même soit l'inverse du sens de rotation du support et donc de l'orifice de sortie. On obtient de bons résultats pour une rotation de la buse sur elle-même de 10 à 50 tours/min., spécialement environ 30 t/min.

La distance de l'orifice de sortie de la buse dans sa position basse au tapis transporteur joue également un rôle. Elle est avantageusement la plus faible possible lorsque l'on souhaite par exemple obtenir un boudin dont la section s'inscrit dans un cercle. Dans le même ordre d'idées, le diamètre de l'orifice de sortie est proportionné au diamètre du cercle qu'il décrit et correspond de préférence à environ la moitié de ce dernier. Si l'on veut par exemple réaliser un boudin dont la section s'inscrit dans une ellipse, on peut tolérer un certain écrasement de l'enroulement. De préférence, la distance entre la position basse de la buse et le tapis n'excède pas 50 mm.

On peut utiliser des buses comportant plusieurs compartiments permettant la co-extrusion de plusieurs boudins de nature différente qui peuvent être co-axiaux (en couches superposées), accolés ou encore séparés.

On peut utiliser une série de buses alignées ou non, transversalement ou longitudinalement par rapport au tapis transporteur, de préférence alignées transversalement, et solidaires du même support. Le fait que le support soit mobile et les buses fixes permet une grande flexibilité de montage puisque les buses ont un encombrement faible, en pratique limité au diamètre extérieur des colliers et bagues de fixation des tubes souples et des douilles de décoration.

L'appareil selon l'invention permet de former des boudins décorés de nature et de couleur diverses à partir d'une masse pâteuse quelconque qui peut, le cas échéant contenir des morceaux solides. A titre d'exemple on peut préparer des articles de boulangerie, de pâtisserie, de confiserie, en particulier de confiserie glacée ou culinaires. Ces articles peuvent être des tronçons de boudin obtenus par découpage de celui-ci.

On peut, par exemple, durcir par congélation des tronçons de crème glacée après y avoir le cas échéant inséré des bâtonnets. Dans le domaine culinaire, on peut, par exemple frire des tronçons de masse de pomme de terre à grande friture puis les congeler pour produire des croquettes décorées. Enfin, on peut confectionner des articles complexes du type des gâteaux ou des plats décorés incorporant les boudins en question.

L'invention sera mieux comprise à l'aide des dessins annexés montrés à titre d'exemple. Aux dessins:

La figure 1 est une vue schématique d'ensemble de l'appareil.

La figure 2 est une vue schématique de gauche par rapport à la figure 1, du boîtier contenant les moyens de transmission du mouvement au support de buse.

La figure 3 est une vue en coupe partielle des moyens de transmission du mouvement au support de buse.

La figure 4 est une vue frontale partielle (4a) et une coupe longitudinale (4b) d'une buse d'un type particulier.

La figure 5 est une vue en coupe d'un ensemble de buses d'un second type.

La figure 6 est une vue frontale partielle d'une buse d'un troisième type.

La figure 7 est une représentation d'un boudin obtenu au moyen de la buse de la figure 4.

La figure 8 est une représentation d'un boudin obtenu au moyen de la buse de la figure 6.

La figure 9 est une représentation schématique du principe d'une variante d'exécution automatisée de l'appareil comprenant des moyens de transmission du mouvement au support de buse par lecture optique et la figure 10 est une représentation schématique des moyens de transmission du mouvement dans la variante de la figure 9.

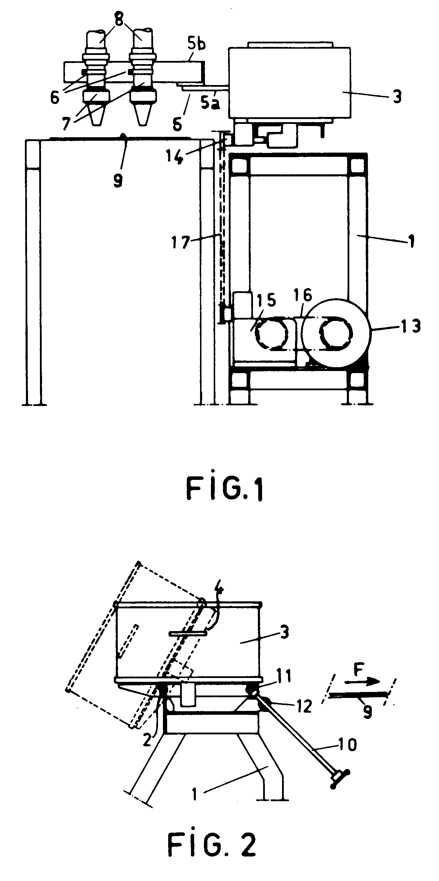

Aux figures 1, 2 et 3 l'appareil est représenté dans une position de repos ne correspondant pas à la position de fonctionnement pour des raisons de clarté. En pointillés sur la figure 2, on voit une position de fonctionnement à environ 60° d'inclinaison du boîtier, ce qui correspond à environ 30° d'inclinaison des buses par rapport à l'horizontale.

Aux figures 1 et 2, l'appareil comprend un bâti 1 sur lequel est monté pivotant autour de l'axe 2 un boîtier 3 contenant le mécanisme d'entraînement décrit en détail plus loin. Une fente 4 est ménagée dans le boîtier 3 par laquelle passe le support 5 constitué de la plaque 5a et du tube 5b fixé à celle-ci.

Autour du tube 5b sont serrées des bagues non représentées solidaires des colliers 6 qui à leur tour serrent les buses d'extrusion 7. Ces moyens de serrage permettent le réglage des buses en inclinaison. Les tubes souples 8 amènent en continu la masse pâteuse vers les buses 7 à partir desquelles elle est déposée sur le tapis transporteur 9 dont la direction de mouvement est indiquée par la flèche F à la figure 2. Une tige filetée 10 articulée au boîtier 3 autour de l'axe 11 permet de régler son inclinaison par vissage dans la pièce 12 solidaire du bâti 1. Ceci règle par la même occasion l'inclinaison du support 5.

Bien entendu, lorsque les tubes souples 8 comme indiqué précédemment entraînent les buses 7 en rotation sur elles-mêmes, les colliers 6 doivent être remplacés, par exemple par des orifices ménagés dans le support 5 ou des bagues de guidage laissant un jeu pour cette rotation.

Le moteur 13 actionne l'arbre 14 via le variateur 15 par l'intermédiaire des chaînes 16 et 17.

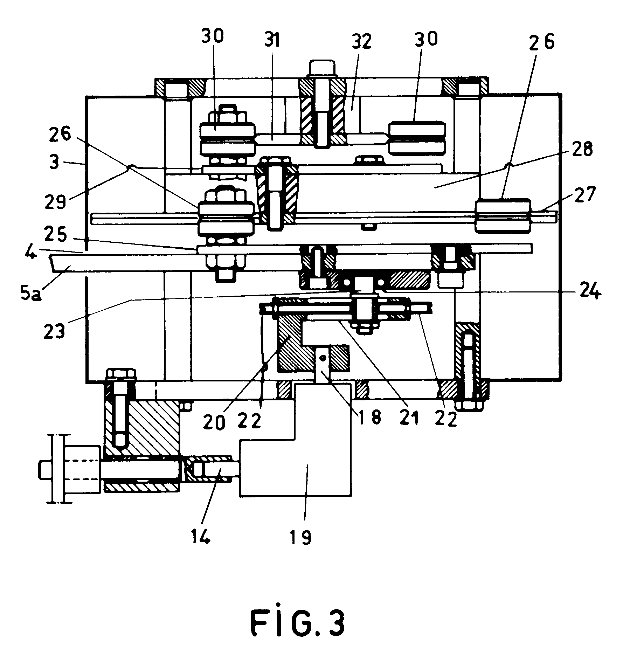

A la figure 3, l'arbre 14 transmet le mouvement de rotation à l'arbre 18 qui lui est perpendiculaire au moyen du renvoi d'équerre 19. A l'arbre 18 est fixée une manivelle 20 dont le levier 21 est réglable par l'intermédiaire des vis 22 qui viennent s'appuyer sur le goujon 23 qui peut, avant serrage des vis 22, coulisser le long d'une lumière ménagée dans le bras du levier.

Le goujon 23 vient se loger dans le palier 24 monté sur roulement à billes et constitue l'oeil articulé de la manivelle. Le palier 24 est fixé à la plaque 5a, elle-même solidaire de la plaque 25, laquelle porte un premier ensemble de 4 galets 26. Les galets 26 peuvent rouler librement sur la glissière 27, ce qui permet le déplacement latéral du support 5. A la glissière 27 est fixé un bloc de distance 28 auquel est fixée à son tour une plaque 29 portant un second ensemble de galets 30. Les galets 30 peuvent rouler librement sur la glissière 31, laquelle est fixée au boîtier 3 par l'intermédiaire du bloc de distance 32. La glissière fixe 31 est perpendiculaire à la glissière mobile 27, ce qui permet le déplacement longitudinal du support 5.

Dans la forme d'exécution décrite ci-dessus, le mouvement transmis au support 5 est circulaire. Il va de soi que moyennant une simple adaptation, le goujon 23 pourrait suivre une came par exemple de forme elliptique fixée au boîtier 3, en supposant par exemple qu'il puisse coulisser dans le levier 21, qu'il soit le cas échéant rappelé vers l'arbre 18 par un ressort et que sa partie inférieure roule dans la came en question par l'intermédiaire d'une roulette.

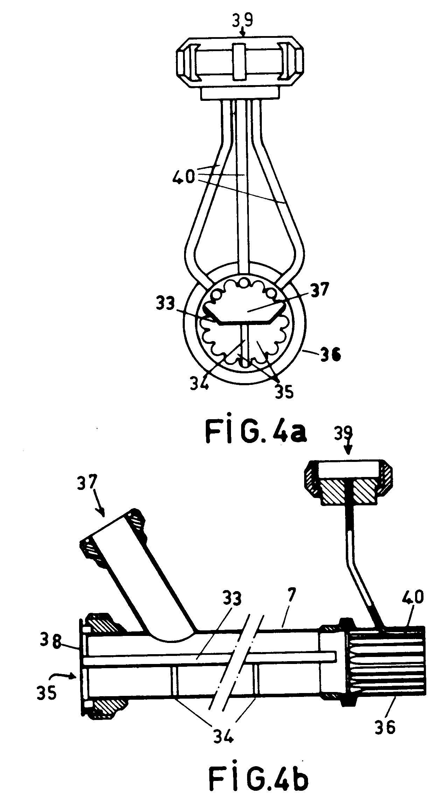

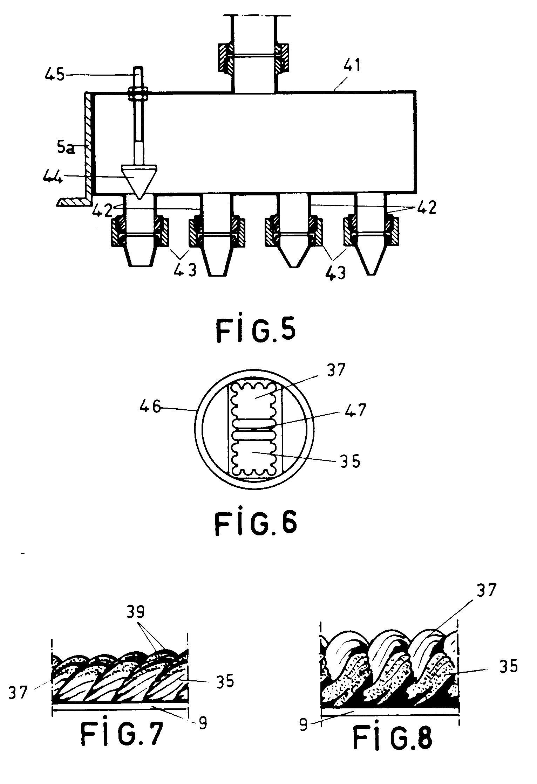

A la figure 4, (4a, 4b) le corps d'une buse 7 est divisé par une cloison interne 33 en forme de gouttière amovible reposant sur le fond du corps 7 par les pieds 34. Une première masse pâteuse, par exemple de crème glacée 35 arrive par le compartiment inférieur à la douille cannelée 36. Une seconde masse pâteuse, par exemple de crème glacée 37 de couleur et parfum différents est amenée par le conduit latéral dans le compartiment supérieur vers la douille 36. Une plaque 38 pleine dans sa partie supérieure et munie d'une lumière correspondant à la section du compartiment inférieur évite que les deux masses pâteuses 35 et 37 ne se mélangent avant d'aborder la douille 36. A ce niveau, elles fusionnent pour former un boudin complexe. Une troisième masse pâteuse, 39 par exemple de sirop de fruit ou de caramel parvient à la douille 36 par les fines tubulures 40 (dont une seule est représentée à la figure 4b par souci de clarté) logées dans les cannelures. Au moyen de cette buse, on peut préparer un boudin décoré du plus bel effet tel que représenté à la figure 7.

A la figure 5, un seul tube souple amène une masse pâteuse vers une chambre parallélépipédique 41 comportant 4 tubes d'extrusion 42 dont les extrémités sont filetées. La chambre 41 est fixée à la plaque 5a et l'ensemble 41, 5a constitue le support 5. Aux extrémités des tubes 42 sont fixées des douilles de décoration du type des douilles pâtissières par l'intermédiaire des bagues 43. En regard de chaque tube 42 sont disposés à l'intérieur de la chambre 41 des pointeaux 44 au moyen desquels on peut régler par l'intermédiaire des vis 45 le débit à chaque douille individuellement (un seul de ces pointeaux est représenté).

A la figure 6, la douille d'extrusion 46 peut s'adapter à une buse telle que représentée à la figure 4b mais dont on aurait enlevé la douille 36. Deux masses pâteuses différentes, par exemple de crème glacée 35, 37 sont extrudées en deux boudins cannelés de section s'inscrivant dans un carré séparés par la pièce 47 qui peut être amovible et qui se prolonge pratiquement jusqu'à l'extrémité de la douille. En faisant pivoter la douille de 45° par rapport à la position telle que représentée à la figure 6 et en la maintenant à 45° lors de l'extrusion, on réalise un boudin décoré "torsadé" tel que représenté à la figure 8.

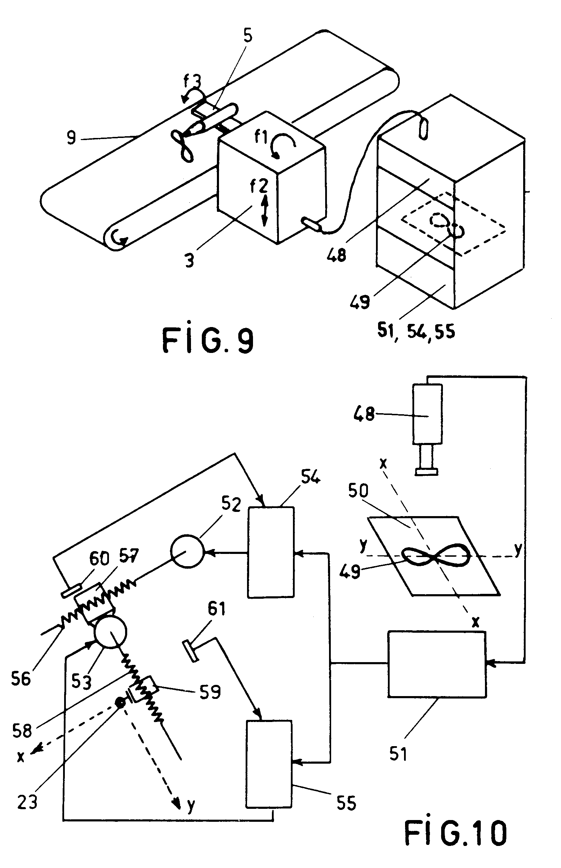

A la figure 9, la commande du mécanisme de transmission de mouvement est assurée par l'intermédiaire d'un ensemble de lecture d'un dessin relié à un ensemble de traitement de l'image produite, lui-même relié à un ensemble d'asservissement du support de buse 5 à un mouvement reproduisant le tracé du dessin. Le boîtier 3 contient le mécanisme de transmission de mouvement détaillé ci-après en liaison avec la figure 10. Le boîtier 3 est réglable en rotation suivant $f_1$ et en hauteur suivant $f_2$. Le support de buse 5 est réglable en inclinaison suivant $f_3$.

En liaison avec la figure 10, une caméra 48 lit un tracé en noir 49 sur un support blanc 50. L'image est transmise à une unité de traitement d'un ordinateur 51 qui l'analyse point par point par rapport à deux axes XX et YY. Ces informations vont piloter deux moteurs à faible inertie 52 et 53 par l'intermédiaire de deux éléments d'asservissement 54 et 55. Le moteur 52 entraîne en tournant une vis sans fin 56 qui prend sur le filetage d'un écrou 57 permettant son déplacement dans les deux sens suivant l'axe XX. Sur l'écrou 57 est fixé le moteur 53 qui entraîne en tournant une vis sans fin 58 perpendiculaire à la vis 56. La vis 58 prend sur le filetage d'un écrou 59 permettant son déplacement dans les deux sens suivant l'axe YY. Le capteur 60 contrôle la valeur de la position de l'écrou 57 et transmet l'information à l'élément d'asservissement 54 où elle est comparée à la valeur analysée de la coordonnée x. De manière analogue, le capteur 61 contrôle la valeur de la position de l'écrou 59 et transmet l'information à l'élément d'asservissement 55 en ce qui concerne la coordonnée y. L'écrou 59 est ainsi animé d'un mouvement combiné dont la résultante est un déplacement suivant le tracé 49. Ce mouvement est transmis au support de buse par exemple par l'intermédiaire d'un goujon tel que 23 de la figure 3 fixé à l'écrou 59. Ce goujon entraîne à son tour l'ensemble mobile constitué par les plaques 5a, 25, les glissières 27 et 31 et les galets 26 et 30 comme décrit précédemment en liaison avec la figure 3. Ainsi, le support de buse évolue dans un plan en suivant le tracé 49, les composantes longitudinale et latérale de son mouvement étant respectivement x et y.

## Revendications

1. Appareil d'extrusion et de décoration de produits pâteux comprenant:
   un tapis transporteur (9) animé d'un mouvement de translation continue,
   un support mobile (5) au dessus du tapis transporteur (9), dont est solidaire une buse d'extrusion (7) reliée par un tube souple (8) à une source d'alimentation continue en produit pâteux, la buse (7) étant orientée parallèlement à ou inclinée vers la direction de mouvement du tapis transporteur (9), des moyens de mise en mouvement du support, de manière qu'il évolue dans un plan et garde toujours la même orientation dans l'espace et que l'orifice de sortie de la buse décrive une trajectoire courbe répétitive, de sorte que le support (5) et le tapis transporteur (9) coopèrent pour former sur ce dernier un boudin continu régulièrement enroulé, caractérisé par le fait que les moyens de mise en mouvement du support comprennent un premier ensemble de galets (26) solidaires du support (5), coulissant sur une première glissière (27) mobile en translation,
   un second ensemble de galets (30) solidaires de la première glissière (27), coulissant sur une seconde glissière (31) fixe perpendiculaire à la première glissière (27) et une manivelle (20) à levier (21) réglable dont l'arbre d'entraînement (18) est relié à un moteur (13) et dont l'oeil (23) est articulé sur le support.

2. Appareil d'extrusion et de décoration de produits pâteux comprenant:
un tapis transporteur (9) animé d'un mouvement de translation continue,
un support mobile (5) au dessus du tapis transporteur (9), dont est solidaire une buse d'extrusion (7) reliée par un tube souple (8) à une source d'alimentation continue en produit pâteux, la buse (7) étant orientée parallèlement à ou inclinée vers la direction de mouvement du tapis transporteur (9), des moyens de mise en mouvement du support, de manière qu'il évolue dans un plan et garde toujours la même orientation dans l'espace et que l'orifice de sortie de la buse décrive une trajectoire courbe répétitive, de sorte que le support (5) et le tapis transporteur (9) coopérent pour former sur ce dernier un boudin continu régulièrement enroulé, caractérisé par le fait que les moyens de mise en mouvement du support comprennent:
un premier ensemble de galets (26) solidaires du support (5), coulissant sur une première glissière (27) mobile en translation,
un second ensemble de galets (30) solidaires de la première glissière (27), coulissant sur une seconde glissière (31) fixe perpendiculaire à la première glissière (27) et
un ensemble de lecture (48) d'un dessin (49) relié à un ensemble de traitement (51) de l'image produite, lui-même relié à un ensemble d'asservissement (54,55) du support de buse à un mouvement reproduisant le tracé du dessin, l'ensemble d'asservissement (54,55) du support de buse étant constitué d'un premier élément d'asservissement (54) pilotant un premier moteur (52) qui entraîne en tournant une première vis sans fin (56) prenant sur le filetage d'un premier écrou (57) et le déplaçant dans les deux sens suivant un axe XX, d'un second élément d'asservissement (55) pilotant un second moteur (53) fixé au premier écrou (57) qui entraîne une seconde vis sans fin (58) perpendiculaire à la première vis (56) prenant sur le filetage d'un second écrou (59) et le déplaçant dans les deux sens suivant un axe YY perpendiculaire à l'axe XX,
et le support (5) de buse étant monté articulé sur une pièce fixe (23) solidaire du second écrou (59) et que les positions du premier et du second écrou sont contrôlées par des capteurs (60,61) reliés aux éléments d'asservissement respectifs (54,55).

3. Appareil selon la revendication 1 ou 2, caractérisé par le fait que le support (5) et la buse (7) sont réglables en direction, en inclinaison et en hauteur par rapport au tapis transporteur (9).

4. Appareil selon la revendication 1 ou 2, caractérisé par le fait que la buse (5) comprend au moins une tubulure interne (40) et/ou une cloison interne (33,47) et délivre des produits de nature différente (35,37,39).

5. Appareil selon l'une des revendications 1 à 4, caractérisé par le fait que les orifices d'extrusion ont un profil cannelé, denté ou rainuré.

**Claims**

1. An apparatus for the extrusion and decoration of pasty products, comprising
a continuously moving conveyor belt (9),
a mobile support (5) above the conveyor belt (9), an extrusion nozzle (7) which is integral with the support and which is connected by a flexible tube (8) to a source for the continuous supply of pasty product, the nozzle (7) being directed parallel to or inclined towards the direction of movement of the conveyor belt (9),
means for transmitting movement to the support so that it revolves in one plane and always keeps the same orientation in space and in such a way that the outlet orifice of the nozzle describes a repetitive curved trajectory so that the support (5) and the conveyor belt (9) cooperate to form a continuous, regularly wound strand on the conveyor belt, characterized in that the means for transmitting movement to the support comprise a first set of rollers (26) integral with the support (5) and sliding on a first displaceable track (27),
a second set of rollers (30) integral with the first track (27) sliding on a second fixed track (31) perpendicular to the first track (27) and a crank (20) having an adjustable lever (21) of which the drive shaft (18) is connected to a motor (13) and of which the eye (23) is pivotally connected to the support.

2. An apparatus for the extrusion and decoration of pasty products, comprising
a continuously moving conveyor belt (9),
a mobile support (5) above the conveyor belt (9), an extrusion nozzle (7) which is integral with the support and which is connected by a flexible tube (8) to a source for the continuous supply of pasty product, the nozzle (7) being directed parallel to or inclined towards the direction of movement of the conveyor belt (9),
means for transmitting movement to the support so that it revolves in one plane and always keeps the same orientation in space and in such a way that the outlet orifice of the nozzle describes a repetitive curved trajectory so that the support (5) and the conveyor belt (9) cooperate to form a continuous, regularly wound strand on the conveyor belt, characterized in that the means for transmitting movement to the support comprise
a first set of rollers (26) integral with the support (5) and sliding on a first displaceable track (27),
a second set of rollers (30) integral with the first track (27) sliding on a second fixed track (31) perpendicular to the first track (27) and
a unit (48) for reading a drawing (49) connected to a unit (51) for processing the image produced which is itself connected to a control unit (54, 55) for imparting to the nozzle support a movement reproducing the trace of the drawing, the control unit (54,55) of the nozzle support consisting of a first control element (54) driving a first motor (52) which turns a first endless screw (56) engaging in the screwthread of a first nut (57) and displacing it in both directions along an axis XX and of a second control element (55) driving a second motor (53) fixed to the first nut (57) which drives a second endless screw (58) perpendicular to the first screw (56) which engages in the screwthread of a second nut (59) and displaces it in both directions along an axis YY perpendicular to the axis XX and
the nozzle support (5) being pivotally mounted on a fixed part (23) integral with the second nut (59) and the positions of the first and second nuts being monitored by sensors (60,61) connected to the respective control elements (54,55).

3. An apparatus as claimed in claim 1 or 2, characterized in that the support (5) and the nozzle (7) are variable in direction, in inclination and in height in relation to the conveyor belt (9).

4. An apparatus as claimed in claim 1 or 2, characterized in that the nozzle (5) comprises at least one internal tube (40) and/or an internal partition (33,47) and delivers products of different type (35, 37, 39).

5. An apparatus as claimed in any of claims 1 to 4, characterized in that the extrusion orifices have a fluted, toothed or grooved profile.

**Patentansprüche**

1. Vorrichtung zur Extrusion und Dekoration von breiförmigen Produkten, bestehend aus:

einem eine kontinuierliche geradlinige Bewegung ausführenden Förderband (9),
einem über dem Förderband (9) beweglichen Halter (5), mit dem eine Extrusionsdüse (7) fest verbunden ist, die durch einen Schlauch (8) mit einer Quelle zur kontinuierlichen Versorgung mit breiförmigem Produkt verbunden ist und zur Bewegungsrichtung des Förderbands (9) parallel gerichtet oder auf diese zu geneigt ist, Einrichtungen zum Antrieb des Halters, so daß er sich in einer Ebene bewegt und immer dieselbe Richtung im Raum beibehält und daß die Austrittsöffnung der Düse eine sich wiederholende gekrümmte Bahn beschreibt, so daß der Halter (5) und das Förderband (9) zusammenarbeiten, um auf letzterem einen regelmäßig gerollten kontinuierlichen Strang zu formen, dadurch gekennzeichnet, daß die Einrichtungen zum Antrieb des Halters eine erste Gruppe von mit dem Halter (5) fest verbundenen Rollen (26), die auf einer ersten geradlinig beweglichen Gleitschiene (27) gleiten, eine zweite Gruppe von mit der ersten Gleitschiene (27) fest verbundenen Rollen (30), die auf einer zweiten, feststehenden, zur ersten Gleitschiene (27) senkrechten Gleitschiene (31) gleiten, und eine Kurbel (20) mit verstellbarem Hebel (21) umfassen, dessen Antriebswelle (18) mit einem Motor (13) verbunden ist und dessen Auge (23) an dem Halter angelenkt ist.

2. Vorrichtung zur Extrusion und Dekoration von breiförmigen Produkten, bestehend aus:
einem eine kontinuierliche geradlinige Bewegung ausführenden Förderband (9),
einem über dem Förderband (9) beweglichen Halter (5), mit dem eine Extrusionsdüse (7) fest verbunden ist, die durch einen Schlauch (8) mit einer Quelle zur kontinuierlichen Versorgung mit breiförmigem Produkt verbunden ist und zur Bewegungsrichtung des Förderbands (9) parallel gerichtet oder auf diese zu geneigt ist, Einrichtungen zum Antrieb des Halters, so daß er sich in einer Ebene bewegt und immer dieselbe Richtung im Raum beibehält und daß die Austrittsöffnung der Düse eine sich wiederholende gekrümmte Bahn beschreibt, so daß der Halter (5) und das Förderband (9) zusammenarbeiten, um auf letzterem einen regelmäßig gerollten kontinuierlichen Strang zu formen, dadurch gekennzeichnet, daß die Einrichtungen zum Antrieb des Halters eine erste Gruppe von mit dem Halter (5) fest verbundenen Rollen (26), die auf einer ersten geradlinig beweglichen Gleitschiene (27) gleiten, eine zweite Gruppe von mit der ersten Gleitschiene (27) fest verbundenen Rollen (30), die auf einer zweiten, feststehenden, zur ersten Gleitschiene (27) senkrechten Gleitschiene (31) gleiten, und eine Einheit (48) zum Lesen einer Zeichnung (49) umfassen, die mit einer Einheit (51) zur Verarbeitung des erzeugten Bilds verbunden ist, die ihrerseits mit einer Steuereinheit (54, 55) verbunden ist, die den Düsenhalter so steuert, daß er eine den Linienverlauf der Zeichnung wiedergebende Bewegung ausführt, wobei die Steuereinheit (54, 55) des Düsenhalters aus einem ersten Steuerelement (54), das einen ersten Motor (52) steuert, der durch seine Drehung eine erste Schnecke (56) antreibt, die mit dem Gewinde einer ersten Mutter (57) in Eingriff ist und diese in einer Achse XX in beiden Richtungen bewegt und aus einem zweiten Steuerelement (55) besteht, das einen zweiten, an der ersten Mutter (57) befestigten Motor (53) steuert, der eine zweite, zur ersten Schnecke (56) senkrechte Schnecke (58) antreibt, die mit dem Gewinde einer zweiten Mutter (59) in Eingriff ist und diese in einer zur Achse XX senkrechten Achse YY in beiden Richtungen bewegt, und der Düsenhalter (5) an einem feststehenden, mit der zweiten Mutter (59) fest verbundenen Teil (23) angelenkt ist, und daß die Stellungen der ersten und der zweiten Mutter durch Fühler (60, 61) gesteuert sind, die mit dem jeweiligen Steuerelement (54, 55) verbunden sind.

3. Vorrichtung nach Anspruch 1 oder 2, dadurch gekennzeichnet, daß der Halter (5) und die Düse (7) in Richtung, Neigung und Höhe bezüglich des Förderbands (9) verstellbar sind.

4. Vorrichtung nach Anspruch 1 oder 2, dadurch gekennzeichnet, daß die Düse (5) wenigstens ein inneres Rohr (40) und/oder eine innere Wand (33, 47) aufweist und Produkte (35, 37, 39) verschiedener Art abgibt.

5. Vorrichtung nach einem der Ansprüche 1 bis 4, dadurch gekennzeichnet, daß die Extrusionsöffnungen ein gerilltes, geriffeltes oder gezahntes Profil haben.

FIG.1

FIG. 2

FIG.3

FIG.4a

FIG.4b

FİG.5

FİG.6

FİG.7

FİG.8

FiG.9

FiG.10